# EUROPEAN PATENT APPLICATION

(11) **EP 4 351 021 A1**
(43) Date of publication of application: **10.04.2024**
(21) Application number: 23821854.9
(22) Date of filing: 26.07.2023
(51) Int. Cl.: H04B 1/44, H04B 1/403, H04B 17/17, H04B 17/29

(54) **ELECTRONIC DEVICE FOR IDENTIFYING STATE OF CIRCUIT RELATED TO COMMUNICATION**

(30) Priority: 31.07.2022 KR 20220095151; 24.08.2022 KR 20220106485
(71) Applicant: Samsung Electronics Co., Ltd., Suwon-si, Gyeonggi-do 16677 (KR)
(72) Inventor: YANG, Jaejin, Suwon-si Gyeonggi-do 16677 (KR); MOON, Yohan, Suwon-si Gyeonggi-do 16677 (KR); NA, Hyoseok, Suwon-si Gyeonggi-do 16677 (KR)
(74) Representative: Gulde & Partner
(86) International application number: PCT/KR2023/010876
(87) International publication number: WO 2024/029830

(57) **Abstract**

An electronic device is provided. The electronic device includes an antenna; a radio frequency front end (RFFE) including a coupler connected to the antenna and a power amplifier (PA) connected to the coupler; a radio frequency integrated circuit (RFIC) including a local oscillator (LO), a Tx (transmit) chain including a mixer connected to the LO, a Rx (receive) chain including the mixer connected to the LO, a first switch for connecting the PA or the Rx chain to the Tx chain, and a second switch for connecting the coupler or the Tx chain to the Rx chain; and a processor. The processor is configured to, based on connecting the PA and the Tx chain through the first switch and connecting the coupler and the Rx chain through the second switch, transmit a first signal obtained through the Rx chain, via the antenna with power set using the PA, and obtain a coupling signal of the first signal through the Rx chain. The processor is configured to, based on connecting the Tx chain disconnected from the PA and the Rx chain disconnected from the coupler, through the first switch and the second switch, obtain a second signal obtained through the Tx chain, via the Rx chain. The processor is configured to identify a state of the RFFE and a state of the RFIC, based at least partially on the coupling signal of the first signal and the second signal.

## Description

### [Technical Field]

The following descriptions relate to an electronic device for identifying a state of a circuit associated with communication.

### [Background Art]

An electronic device may include an antenna, a radio frequency front end (RFFE), and a radio frequency integrated circuit (RFIC) for wireless communication with an external electronic device. For example, the electronic device may transmit a signal to the external electronic device using the antenna, the RFFE, and the RFIC. For example, the electronic device may set a frequency of the signal using a mixer in the RFIC and/or set a transmission power of the signal on the frequency using a power amplifier (PA) in the RFFE. For example, the electronic device may transmit the signal on the frequency to the external electronic device using the antenna with the transmission power.

### [Disclosure]

### [Technical Solution]

An electronic device is provided. The electronic device may include an antenna. The electronic device may include a radio frequency front end (RFFE) including a coupler connected to the antenna and a power amplifier (PA) connected to the coupler. The electronic device may include an RFIC including a local oscillator (LO), a Tx (transmit) chain including a mixer connected to the LO, a Rx (receive) chain including the mixer connected to the LO, a first switch for connecting the PA or the Rx chain to the Tx chain, and a second switch for connecting the coupler or the Tx chain to the Rx chain. The electronic device may include a processor. Based on connecting the PA and the Tx chain through the first switch and connecting the coupler and the Rx chain through the second switch, the processor may be configured to transmit a first signal obtained through the Rx chain, through the antenna with power set using the PA, and obtain a coupling signal of the first signal through the Rx chain. Based on connecting the Tx chain disconnected from the PA and the Rx chain disconnected from the coupler through the first switch and the second switch, the processor may be configured to obtain a second signal obtained through the Tx chain, through the Rx chain. The processor may be configured to identify a state of the RFFE and a state of the RFIC, based at least partially on the coupling signal of the first signal and the second signal.

An electronic device is provided. The electronic device may include an antenna. The electronic device may include a radio frequency integrated circuit (RFIC) including a local oscillator (LO), a Tx (transmit) chain including a mixer connected to the LO, and a Rx (receive) chain including the mixer connected to the LO. The electronic device may include a radio frequency front end (RFFE) including a coupler connected to the antenna and connected to the Rx chain, a power amplifier (PA), a first switch for connecting the PA or the coupler to the Tx chain, and a second switch for connecting the Tx chain or the PA to the coupler. The electronic device may include a processor. Based on connecting the PA and the Tx chain through the first switch and connecting the coupler and the Rx chain through the second switch, the processor may be configured to transmit a first signal obtained through the Tx chain, via the antenna with the power set using the PA, and obtain a coupling signal of the first signal through the Rx chain. Based connecting the Tx chain disconnected from the PA and the coupler disconnected from the PA through the first switch and the second switch, the processor may be configured to transmit a second signal obtained through the Tx chain and obtain a coupling signal of the second signal through the Rx chain. Based at least partially on the coupling signal of the first signal and the coupling signal of the second signal, the processor may be configured to identify a state of the RFFE and a state of the RFIC.

An electronic device is provided. The electronic device may include a first antenna. The electronic device may include a second antenna. The electronic device may include a first radio frequency front end (RFFE) including a coupler connected to the first antenna and a power amplifier (PA) connected to the coupler. The electronic device may include a second RFFE including a coupler connected to the second antenna and a PA connected to the coupler connected to the second antenna. The electronic device may include a radio frequency integrated circuit (RFIC) including a first local oscillator (LO), a second LO, a first Tx (transmit) chain including a mixer capable of connecting to the first LO of the first LO and the second LO, a second Tx chain including a mixer capable of connecting to the second LO of the first LO and the second LO, a Rx (receive) chain including a mixer capable of connecting to the first LO or the second LO, a first switch for connecting the PA of the first RFFE or the Rx chain to the first Tx chain or connecting the PA of the second RFFE or the Rx chain to the second Tx chain, a second switch for connecting the coupler of the first RFFE or the first Tx chain to the Rx chain or connecting the coupler of the second RFFE or the second Tx chain to the Rx chain, and a third switch for connecting the first LO to the mixer of the first Tx chain, connecting the second LO to the mixer of the second Tx chain, or connecting the first LO or the second LO to the mixer of the Rx chain. The electronic device may include a processor. The processor may be configured to, based on connecting the PA of the first RFEE and the first Tx chain through the first switch, while the first LO is connected to the mixer of the first Tx chain through the third switch, transmit a first signal obtained through the first Tx chain, via the first antenna with the power set using the PA of the first RFFE. The processor may be configured to, based on connecting the coupler of the first RFFE and the Rx chain through the second switch while the first LO is connected to the mixer of the Rx chain through the third switch, obtain a coupling signal of the first signal through the Rx chain. Th processor may be configured to, based on connecting the PA of the second RFFE and the second Tx chain through the first switch, while the second LO is connected to the mixer of the second Tx chain through the third switch, transmit a second signal obtained through the second Tx chain, via the second antenna with the power set using the PA of the second RFFE. The processor may be configured to obtain a coupling signal of the second signal through the Rx chain, based on connecting the coupler of the second RFFE and the Rx chain through the second switch, while the second LO is connected to the mixer of the Rx chain through the third switch. The processor may be configured to, based on connecting the first Tx chain disconnected from the PA of the first RFFE and the Rx chain disconnected from the coupler of the first RFFE through the first switch and the second switch, obtain a third signal, the third signal being obtained through the first Tx chain while the first LO is connected to the mixer of the first Tx chain through the third switch, through the Rx chain while the first LO is connected to the mixer of the Rx chain through the third switch. The processor may be configured to, based on connecting the second Tx chain disconnected from the PA of the second RFFE and the Rx chain disconnected from the coupler of the second RFFE, through the first switch and the second switch, obtain a fourth signal, the fourth signal being obtained through the second Tx chain while the second LO is connected to the mixer of the second Tx chain through the third switch, through the Rx chain while the second LO is connected to the mixer of the Rx chain through the third switch. The processor may be configured to identify a state of the first RFFE, a state of the second RFFE, and a state of the RFIC, based at least partially on the coupling signal of the first signal, the coupling signal of the second signal, the third signal, and the fourth signal.

### [Description of the Drawings]

FIG. 1 is a simplified block diagram of an exemplary electronic device.
FIG. 2 illustrates examples of a Tx (transmit) chain and an Rx (receive) chain.
FIG. 3 illustrates an example of a switch included in a radio frequency front end (RFFE).
FIG. 4 illustrates an example of an attenuator.
FIG. 5 is a flowchart illustrating an exemplary method of obtaining a second signal based on obtaining a coupling signal of a first signal.
FIG. 6 illustrates an example of a state of a coupling signal of a first signal.
FIG. 7 is a flowchart illustrating an exemplary method of obtaining a coupling signal of a first signal based on obtaining a second signal.
FIG. 8 is a flowchart illustrating an exemplary method of identifying a state of a radio frequency front end (RFIC) and an RFFE based on obtaining a coupling signal of a first signal and a second signal.
FIGS. 9 to 10 are simplified block diagrams of an exemplary electronic device.
FIG. 11 is a simplified block diagram of an exemplary electronic device including two or more RFFEs.
FIG. 12 is a block diagram of an electronic device in a network environment according to various embodiments.

### [Mode for Invention]

An electronic device may include a radio frequency integrated circuit (RFIC) (e.g., a radio frequency transceiver), a radio frequency front end (RFFE), and an antenna, for communication with an external electronic device. For example, the electronic device may transmit a signal to the external electronic device using the RFIC and the RFFE. For example, the electronic device may set a frequency of the signal using a mixer in the RFIC. For example, the electronic device may set a transmission power of the signal in the frequency using a power amplifier (PA) in the RFFE. For example, the electronic device may transmit the signal in the frequency to the external electronic device using the antenna with the transmission power.

At least a part of the communication circuit including the RFIC and the RFFE may malfunction or operate abnormally. Such a malfunction of at least a part of the communication circuit may cause damage to the communication circuit. For example, the electronic device may identify a state of the RFIC and a state of the RFFE in order to reduce the malfunction of at least some of the communication circuit and/or the damage to at least some other part of the communication circuit.

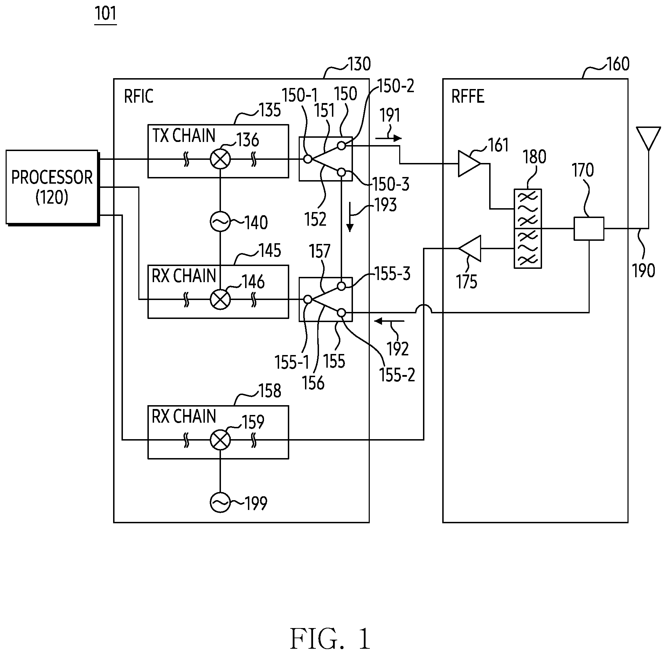

FIG. 1 is a simplified block diagram of an exemplary electronic device.

Referring to FIG. 1, an electronic device 101 may include a processor 120, an RFIC 130, an RFFE 160, and an antenna 190.

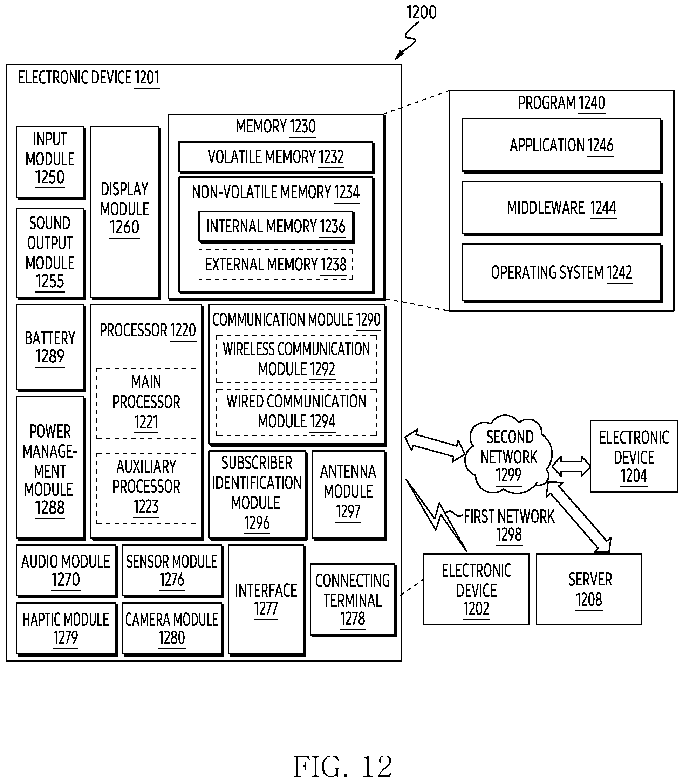

For example, the electronic device 101 may include at least a portion of the components of an electronic device 1201 in FIG. 12, which will be described below. For example, the processor 120 may at least partially correspond to a processor 1220 in FIG. 12, which will be described below. For example, each of the RFIC 130 and the RFFE 160 may at least partially correspond to a wireless communication module 1292 in FIG. 12 and/or the antenna module 1297 in FIG. 12. For example, the antenna 190 may include at least a portion of an antenna module 1297 in FIG. 12. However, the disclosure is not limited thereto.

For example, the RFFE 160 may include a coupler 170 connected to the antenna 190. For example, the coupler 170 may be used to obtain a coupling signal that is part of a signal transmitted through the antenna 190. For example, the RFFE 160 may include a power amplifier (PA) 161 connected to the coupler 170. For example, throughout the present document, an expression such as "a first component and the second component are connected" may imply that not only "the first component and the second component are directly connected", but also "the first component and the second component are connected via a third component". For example, a PA 161 may be connected to the coupler 170 through a duplexer 180. For example, the RFFE 160 may include the duplexer 180 in between the PA 161 and the coupler 170.

For example, the PA 161 may be used to set a transmission power of a signal transmitted through the antenna 190. For example, the duplexer 180 may be used to identify a signal transmitted through the antenna 190 and another signal received through the antenna 190.

For example, the RFFE 160 may further include a low noise amplifier (LNA) 175. For example, the LNA 175 may be used to amplify power of the signal received through the antenna 190.

For example, the RFIC 130 may include a Tx (transmit) chain 135. For example, the RFIC 130 may include a local oscillator (LO) 140. For example, the Tx chain 135 may include a mixer 136 connected to the LO 140. For example, a signal provided from the processor 120 may be up-converted through the mixer 136 connected to the LO 140. For example, the up-converted signal may be provided to the RFFE 160.

For example, the RFIC 130 may include an Rx (receive) chain 145. For example, the Rx chain 145 may include a mixer 146 connected to the LO 140. For example, a signal provided from the RFFE 160 may be down-converted through the mixer 146 connected to the LO 140. For example, the down-converted signal may be provided to processor 120.

For example, the RFIC 130 may include a first switch 150. For example, the first switch 150 may be used to electrically connect the PA 161 or the Rx chain 145 to the Tx chain 135. For example, the first switch 150 may include a first terminal 150-1 connected to the Tx chain 135, a second terminal 150-2 connected to the PA 161, and a third terminal 150-3 connected to the third terminal 155-3 of the second switch 155.

For example, the RFIC 130 may include a second switch 155. For example, the second switch 155 may be used to electrically connect the coupler 170 or the Tx chain 135 to the Rx chain 145. For example, the second switch 155 may include a first terminal 155-1 connected to the Rx chain 145, a second terminal 155-2 connected to the coupler 170, and a third terminal 155-3 connected to the third terminal 150-3 of the first switch 150.

For example, the RFIC 130 may further include an Rx chain 158. For example, the RFIC 130 may include an LO 199 different from the LO 140. For example, the RFIC 130 may include a mixer 159 connected to the LO 199. For example, the signal provided from the RFFE 160 may be down-converted through the mixer 159 connected to the LO 199. For example, the down-converted signal may be provided to the processor 120. For example, the Rx chain 158 may be used to obtain a signal received through the antenna 190 and the LNA 175, unlike the Rx chain 145 used to obtain a coupling signal 192 of a first signal 191 to be described below.

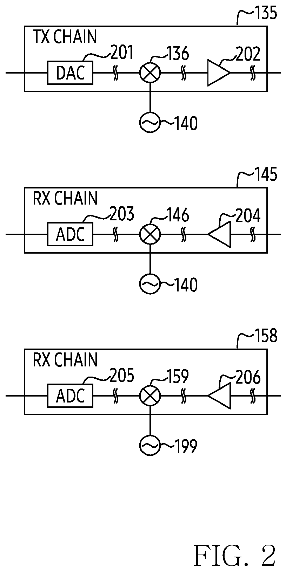

The Tx chain 135, the Rx chain 145, and the Rx chain 158 are illustrated in FIG. 2, respectively.

FIG. 2 illustrates examples of a Tx (transmit) chain and an Rx (receive) chain.

Referring to FIG. 2, the Tx chain 135 may further include a digital-to-analog converter (DAC) 201 and a PA 202. For example, the DAC 201 may be used to convert a digital signal input to DAC 201 into an analog signal. For example, the mixer 136 connected to the LO 140 may be used to up-convert a signal input to the mixer 136. For example, the PA 202 may be used to amplify a signal input to PA 202.

The Rx chain 145 may further include an analog-to-digital converter (ADC) 203 and a PA 204. For example, the PA 204 may be used to amplify a signal input to the PA 204. For example, the mixer 146 connected to the LO 140 may be used to down-convert a signal input to the mixer 146. For example, the ADC 203 may be used to convert an analog signal input to ADC 203 into a digital signal.

The Rx chain 158 may further include an ADC 205 and a PA 206. For example, the PA 206 may be used to amplify a signal input to PA 206. For example, the mixer 159 connected to the LO 199 may be used to down-convert a signal input to the mixer 159. For example, the ADC 205 may be used to convert an analog signal input to ADC 205 into a digital signal.

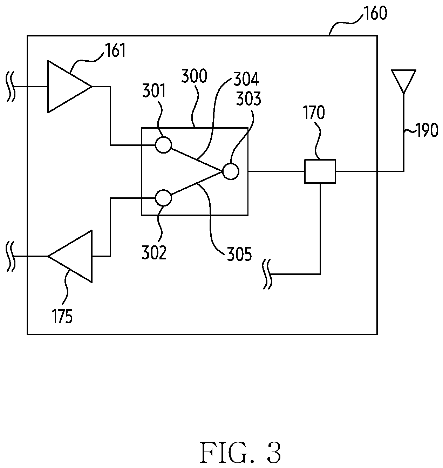

Referring back to FIG. 1, the RFFE 160 may include a switch replacing the duplexer 180. The switch is described with reference to FIG. 3.

FIG. 3 illustrates an example of a switch included in an RFFE.

Referring to FIG. 3, the RFFE 160 may include a switch 300 instead of the duplexer 180. For example, when the RFFE 160 is an RFFE for a frequency division duplex (FDD), the RFFE 160 may include the duplexer 180. For example, when the RFFE 160 is an RFFE for a time division duplex (TDD), the RFFE 160 may include a switch 300. For example, the switch 300 may include a first terminal 301 connected to the PA 161, a second terminal 302 connected to the LNA 175, and a third terminal 303 connected to the coupler 170. For example, the switch 300 may be in a first state 304 electrically connecting the first terminal 301 and the third terminal 303 within time resources transmitting a signal through the antenna 190. For example, the switch 300 may be in a second state 305 electrically connecting the second terminal 302 and the third terminal 303 within time resources receiving a signal through the antenna 190.

Referring again to FIG. 1, in an embodiment, the processor 120 may perform operations for identifying states of at least a portion of the RFIC 130 and at least a portion of the RFFE 160, based on the control of the first switch 150 and/or the second switch 155.

For example, based on electrically connecting the PA 161 and the Tx chain 135 through the first switch 150 and electrically connecting the coupler 170 and the Rx chain 145 through the second switch 155, the processor 120 may transmit a first signal 191 obtained through the Tx chain 135, through the antenna 190 with the power set using the PA 161. For example, the first signal 191 may be transmitted to an external electronic device through the antenna 190. For example, the coupling signal 192 of the first signal 191 may be part of the first signal 191 transmitted through the antenna 190. For example, the connection between the PA 161 and the Tx chain 135 may be formed through the state 151 of the first switch 150 electrically connecting the second terminal 150-2 of the first switch 150, amongst the second terminal 150-2 and the third terminal 150-3 of the first switch 150, to the first terminal 150-1 of the first switch 150. For example, the connection between the coupler 170 and the Rx chain 145 may be formed through the state 156 of the second switch 155 electrically connecting the second terminal 155-2 of the second switch 155, amongst the second terminal 155-2 of the second switch 155 and the third terminal 155-3 of the second switch 155, to the first terminal 155-1 of the second switch 155.

For example, the processor 120 may obtain a second signal 193 obtained through the Tx chain 135, via the Rx chain 145, based on connecting the Tx chain 135 electrically disconnected from the PA 161 and the Rx chain 145 electrically disconnected from the coupler 170, via the first switch 150 and the second switch 155.

For example, the processor 120 may electrically disconnect the Tx chain 135 from the PA 161 based on changing the state of the first switch 150 from the state 151 to the state 152, electrically disconnect the Rx chain 145 from the coupler 170 based on changing a state of the second switch 150 from the state 156 to the state 157, and electrically connect the Tx chain 135 and the Rx chain 145 through the first switch 150 in the state 152 and the second switch 155 in the state 157. For example, the electrical connection between the Tx chain 135 and the Rx chain 145 may be formed through the state 152 of the first switch 150 connecting the third terminal 150-3 of the first switch 150, amongst the second terminal 150-2 of the first switch 150 and the third terminal 150-3 of the first switch 150, to the first terminal 150-1 of the first switch 150, and the state 157 of the second switch 155 connecting the third terminal 155-3 of the second switch 155, amongst the second terminal 155-2 of the second switch 155 and the third terminal 155-3 of the second switch 155, to the first terminal 150-1 of the second switch 155.

For example, the processor 120 may identify the state of the RFFE 160 and the state of the RFIC 130, based at least partially on the coupling signal 192 of the first signal 191 and the second signal 193.

For example, since the coupling signal 192 of the first signal 191 is the part of the first signal 191 transmitted through the Tx chain 135 and PA 161, the coupling signal 192 of the first signal 191 may indicate a state of a transmission path of the first signal 191 and a reception path of the coupling signal 192. For example, the coupling signal 192 of the first signal 191 may indicate a state of the Tx chain 135 and a state of the PA 161. For example, the coupling signal 192 of the first signal 191 indicating the state of the Tx chain 135 and the state of the PA 161 may indicate that the coupling signal 192 of the first signal 191 can be used to obtain information about the state of the Tx chain 135 and the state of the PA 161. For example, the coupling signal 192 of the first signal 191 may indicate the state of the Rx chain 145. For example, the coupling signal 192 of the first signal 191 indicating the state of the Rx chain 145 may indicate that the coupling signal 192 of the first signal 191 can be used to obtain information about the state of the Rx chain 145.

For example, since the second signal 193 is generated through the Tx chain 135 and obtained through the Rx chain 145, the second signal 193 may indicate the state of the RFIC 130 amongst the RFIC 130 and the RFFE 160. For example, since the second signal 193 does not pass through the RFFE 160, the second signal 193 may indicate the state of the Tx chain 135 amongst the state of the Tx chain 135 and the state of the PA 161. For example, since the second signal 193 does not pass through the RFFE 160, the second signal 193 may indicate the state of the Rx chain 145.

For example, since the coupling signal 192 of the first signal 191 indicates both the states of the Tx chain 135 and the state of the PA 161, and the second signal 193 indicates only the state of the Tx chain 135 amongst the Tx chain 135 and the PA 161, the processor 120 may identify the state of the RFFE 160 and the state of the RFIC 130, based on the coupling signal 192 of the first signal 191 and the second signal 193.

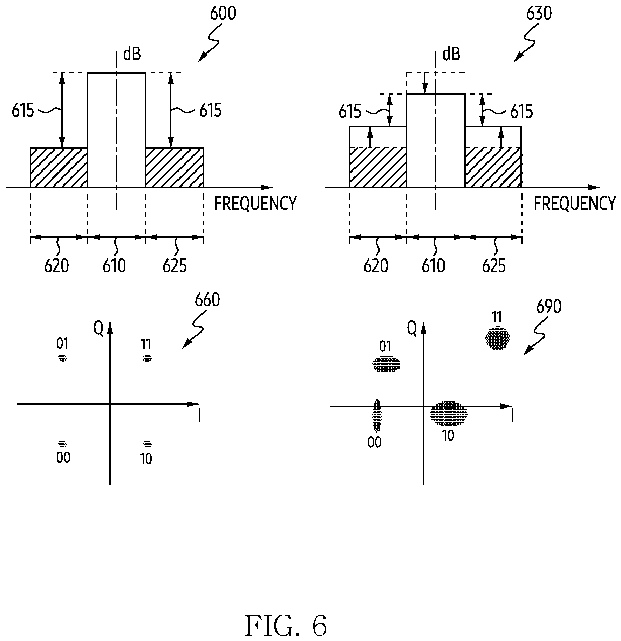

For example, the processor 120 may identify, based on the coupling signal 192 of the first signal 191 within the first reference state, that the state of the Tx chain 135 (or the state of at least a portion of the RFIC 130 related to the transmission of the first signal 191 and the reception of the coupling signal 192 of the first signal 191) and the state of the PA 161 (or the state of at least a portion of the RFFE 160 related to the transmission of the first signal 191) are in a normal operating state. For example, the coupling signal 192 of the first signal 191 in the first reference state may indicate that the first signal 191 is transmitted through the antenna 190 with a targeted transmission power on a targeted frequency. The coupling signal 192 of the first signal 191 in the first reference state will be described with the description of FIG. 6. For example, the Tx chain 135 and PA 161 in the normal operating state may indicate that the Tx chain 135 and PA 161 are in a state capable of transmitting signals through the antenna 190 with the targeted transmission power at the targeted frequency.

For example, based on the coupling signal 192 in a state different from the first reference state, the processor 120 may identify that the state of the Tx chain 135 (or the state of at least a portion of the RFIC 130 related to the transmission of the first signal 191 and the reception of the coupling signal 192 of the first signal 191) and/or the state of the PA 161 (or the state of at least a portion of the RFFE 160 related to the transmission of the first signal 191) are different from the normal operating state. For example, the coupling signal 192 of the first signal 191 in a state different from the first reference state may indicate that the first signal 191 is transmitted through the antenna 190 in a frequency distinct from the targeted frequency, the first signal 191 is transmitted through the antenna 190 with a transmission power distinct from the targeted transmission power, or the first signal 191 is transmitted through the antenna 190 with a transmission power distinct from the targeted transmission power in a frequency distinct from the targeted frequency. The coupling signal 192 of the first signal 191 in the state different from the first reference state will be illustrated with the description of FIG. 6. For example, the Tx chain 135 in the state different from the normal operating state (e.g., a malfunction state or an abnormal operating state) may indicate that the Tx chain 135 is in a state of identifying or providing a frequency distinct from the targeted frequency. For example, the Tx chain 135 obtaining a signal in a frequency distinct from the targeted frequency and transmitting the signal to the PA 161 may cause damage to the PA 161. For example, the Tx chain 135 in the state different from the normal operating state may indicate that the Tx chain 135 is in a state that may cause damage to the PA 161. For example, the PA 161 in the state different from the normal operating state may indicate that the PA 161 is in a state of setting a transmission power distinct from the targeted transmission power.

For example, the processor 120 may identify that the state of the Tx chain 135 is the normal operating state, based on the second signal 193 in the second reference state. For example, the second signal 193 in the second reference state may indicate a targeted (or required) state related to the transmission of the first signal 191. For example, the second signal 193 in the second reference state may indicate that the state of the Tx chain 135 is the normal operating state. For example, since the second signal 193 does not pass through the RFFE 160, the processor 120 may identify that the state of the Tx chain 135 is the normal operating state, based on the second signal 193 in the second reference state.

For example, the processor 120 may identify that the state of the Tx chain 135 is different from the normal operating state, based on the second signal 193 in the state different from the second reference state. For example, since the second signal 193 does not pass through the RFFE 160, the processor 120 may identify that the state of the Tx chain 135 is different from the normal operating state, based on the second signal 193 in the state different from the second reference state.

For example, the processor 120 may identify that the state of at least a portion of the RFFE 160 related to the transmission of the first signal 191 is different from the normal operating state, based on the coupling signal 192 of the first signal 191 in the state different from the first reference state and the second signal 193 in the second reference state.

For example, the processor 120 may identify that the state of at least a portion of the RFIC 130 related to transmitting the first signal 191 and obtaining the second signal 193, based on the coupling signal 192 of the first signal 191 in the state different from the first reference state and the second signal 193 in the state different from the second reference state. For example, the processor 120 may identify that the state of at least a portion of the RFIC 130 and/or at least a portion of the RFFE 160 are different from the normal operating state, based on the coupling signal 192 of the first signal 191 in the state different from the first reference state and the second signal 193 in the state different from the second reference state.

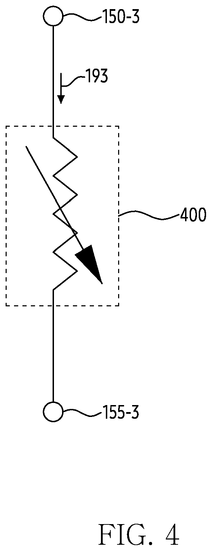

For example, the electronic device 101 may further include an attenuator (not shown explicitly in Fig. 1) in between the third terminal 150-3 of the first switch 150 and the third terminal 155-3 of the second switch 155 in order to reduce damage to at least a part of the RX chain 145 due to the strength of the second signal 193. The attenuator will be described with reference to FIG. 4.

FIG. 4 illustrates an example of an attenuator according to an embodiment.

Referring to FIG. 4, the RFIC 130 may include an attenuator 400 in a connection path between the third terminal 150-3 of the first switch 150 and the third terminal 155-3 of the second switch 155. For example, the processor 120 may obtain a second signal 193 having reduced power through the Rx chain 145, via the attenuator 400, based on electrically connecting the Tx chain 135 and the Rx chain 145 through the first switch 150 and the second switch 155. For example, the reduced power may be identified under the control of processor 120. For example, the second signal 193 passing through the attenuator 400 may reduce damage to the Rx chain 145 due to the strength of the second signal 193.

FIG. 4 illustrates an example in which the attenuator 400 includes a variable resistor, but it is merely for convenience of description. For example, the attenuator 400 may further include a field effect transistor (FET), a resistance, an inductor, a capacitor, and/or bias ports. However, the disclosure is not limited thereto.

For example, obtaining the coupling signal 192 of the first signal 191 and obtaining the second signal 193 may be implemented in various ways.

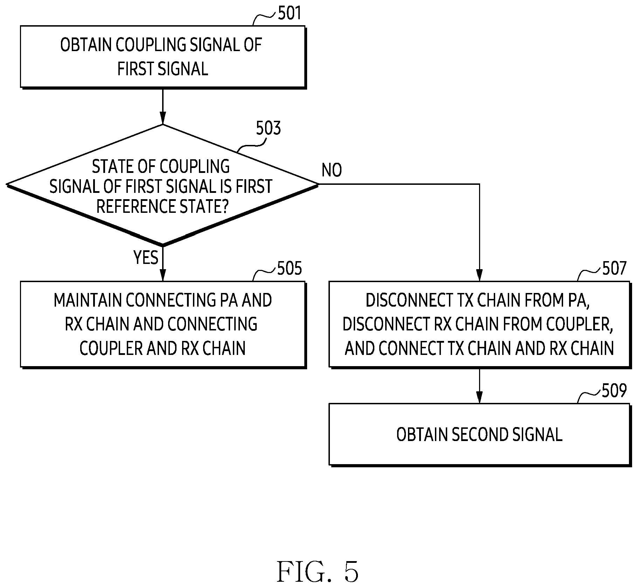

For example, after obtaining the coupling signal 192 of the first signal 191, the processor 120 may obtain the second signal 193. The obtaining the second signal 193 based on obtaining the coupling signal 192 of the first signal 191 will be further described with reference to FIG. 5.

FIG. 5 is a flowchart illustrating an exemplary method of obtaining a second signal based on obtaining a coupling signal of a first signal.

Referring to FIG. 5, in operation 501, the processor 120 may obtain a coupling signal 192 of a first signal 191. For example, the coupling signal 192 of the first signal 191 may be obtained through the Rx chain 145.

In operation 503, the processor 120 may identify whether a state of the coupling signal 192 of the first signal 191 is in the first reference state. For example, the processor 120 may identify whether the state of the coupling signal 192 of the first signal 191 is in the first reference state, based on comparing the reference information with information indicating the quality of the coupling signal 192 of the first signal 191. For example, the information may be obtained based on identifying an adjacent channel power ratio (ACPR), an adjacent channel leakage ratio (ACLR), or an error vector magnitude (EVM) of the coupling signal 192 of the first signal 191. For example, the reference information may be a parameter used to identify the state of the coupling signal 192 of the first signal 191. For example, the reference information may correspond to a threshold value to be illustrated through the description of FIG. 6. For example, the processor 120 may identify whether the state of the coupling signal 192 of the first signal 191 is the first reference state, based on a difference between the reference information and the information. The state of the coupling signal 192 of the first signal 191 is described with reference to FIG. 6.

FIG. 6 illustrates an example of a state of a coupling signal of a first signal.

Referring to FIG. 6, the horizontal axis of each of charts 600 and 630 represents a frequency, and the vertical axis of each of the chart 600 and 630 represents a strength of the coupling signal 192 of the first signal 191. For example, a range 610 of each of the charts 600 and 630 indicates a target frequency range (or required frequency range) of the first signal 191 (or the coupling signal 192 of the first signal 191), and ranges 620 and 625 of each of the charts 600 and 630 indicate a frequency range out of the target frequency range. For example, as in the chart 600, the processor 120 may identify that the state of the coupling signal 192 of the first signal 191 is in the first reference state, based on identifying that a difference value 615 between the intensity of the coupling signal 192 of the first signal 191 in the range 610 and the intensity of the coupling signal 192 of the first signal 191 in the ranges 620 and 625 is greater than or equal to a threshold value. For example, as in the chart 630, the processor 120 may identify that the state of the coupling signal 192 of the first signal 191 is different from the first reference state, based on identifying that the difference value 615 is less than the threshold value. However, the present disclosure is not limited thereto.

Each horizontal axis of the chart 660 and the chart 690 represents an in-phase component, and each vertical axis of the chart 660 and the chart 690 represents an quadrature phase component. For example, the processor 120 may identify that the coupling signal 192 of the first signal 191 is in the first reference state, based on identifying that the coupling signal 192 of the first signal 191 is within the state indicated by the chart 660. For example, the processor 120 may identify that the state of the coupling signal 192 of the first signal 191 is different from the first reference state, based on identifying that the coupling signal 192 of the first signal 191 is within the state represented by the chart 690. However, the disclosure is not limited thereto. Although the identification has been described with respect to whether the coupling signal 192 is in the first reference state, the above examples may be applied in equivalently manner with respect to whether the second signal 193 is in second reference state.

Referring back to FIG. 5, the processor 120 may execute operation 505 based on the coupling signal 192 of the first signal 191 that is in the first reference state and execute operation 507 based on the coupling signal 192 of the first signal 191 that is in the state different from the first reference state.

In operation 505, the processor 120 may maintain to electrically connect the PA 161 and the Tx chain 135 through the first switch 150 and to electrically connect the coupler 170 and the Rx chain 145 through the second switch 155, on condition that the state of the coupling signal 192 of the first signal 191 is in the first reference state. For example, the state of the coupling signal 192 of the first signal 191 being in the first reference state indicates that at least a portion of the RFIC 130 and at least a portion of the RFFE 160 used for the transmission of the first signal 191 are in the normal operating state, and thus, the processor 120 may maintain an electrical connection between the PA 161 and the Tx chain 135 through the first switch 150 and an electrical connection between the coupler 170 and the Rx chain 145 through the second switch 155, for transmitting a signal subsequent to the first signal 191. For example, the processor 120 may refrain from electrically disconnecting the Tx chain 135 from the PA 161 through the first switch 150, electrically disconnecting the Rx chain 145 from the coupler 170 through the second switch 155, and electrically connecting the Tx chain 135 and the Rx chain 145 through the first switch 150 and the second switch 155.

In operation 507, the processor 120 may electrically disconnect the Tx chain 135 from the PA 161 through the first switch 150 through the first switch 150, electrically disconnect the Rx chain 140 from the coupler 170 through the second switch 155, and electrically connect the Tx chain 135 and the Rx chain 140 through the first switch 150 and the second switch 155. For example, the state of the coupling signal 192 of the first signal 191 being different from the first reference state indicates that the state of at least a portion of the RFIC 130 and/or at least a portion of the RFFE 160 is different from the normal operating state, and therefore, for identifying components (e.g., at least a portion of the RFIC 130 and/or at least a portion of the RFFE 160) operating in the state different from the normal operating state, amongst the at least a portion of the RFIC 130 and the at least a portion of the RFFE 160, the processor 120 may electrically separate the RFFE 160 from each of the Tx chains 135 and Rx chains 145 in the RFIC 130, by electrically disconnecting the Tx chain 135 from the PA 161 through the first switch 155, electrically disconnecting the Rx chain 140 from the coupler 170 through the second switch 155, and electrically connecting the Tx chain 135 and the Rx chain 140 through the first switch 150 and the second switch 155.

In operation 509, the processor 120 may obtain the second signal 193 obtained through the Tx chain 135, through the Rx chain 145, via the first switch 150 in the state 152 and the second switch 155 in the state 157. Although not shown in FIG. 5, the processor 120 may identify whether the state of at least a portion of the RFIC 130 related to the transmission of the first signal 191 is in the normal operating state, based on the second signal 193.

As described above, the electronic device 101 may obtain the second signal 193 according to the state of the coupling signal 192 of the first signal 191. For example, the electronic device 101 may obtain the second signal 193 in response to the coupling signal 192 of the first signal 191 different from the first reference state, and identify whether at least a portion of the RFIC 130 related to the transmission of the first signal 191 is in the normal operating state, based on the second signal 193. For example, the electronic device 101 may identify whether a component related to the transmission of the first signal 191 in malfunction is at least a portion of the RFIC 130 related to the transmission of the first signal 191 or at least a portion of the RFFE 160 related to the transmission of the signal 191.

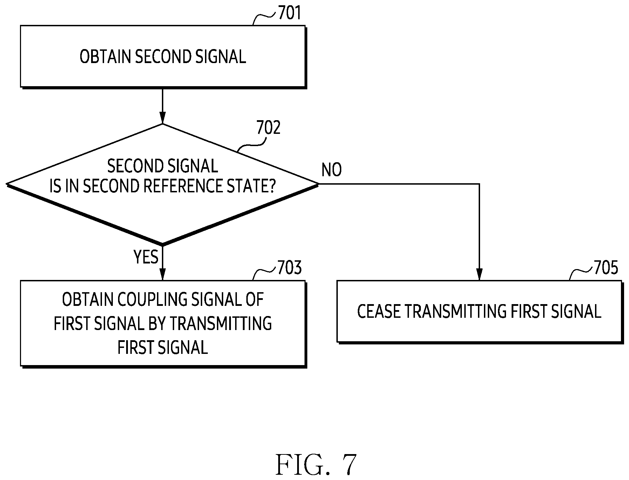

Referring back again to FIG. 1, in an embodiment, the processor 120 may obtain the coupling signal 192 of the first signal 191 by transmitting the first signal 191 after obtaining the second signal 193. The obtaining the coupling signal 192 of the first signal 191 after obtaining the second signal 193 will be described with further reference to FIG. 7.

FIG. 7 is a flowchart illustrating an exemplary method of obtaining a coupling signal of a first signal based on obtaining a second signal.

Referring to FIG. 7, in operation 701, the processor 120 may obtain the second signal 193. For example, the processor 120 may obtain the second signal 193 using the first switch 150 in the state 152 and the second switch 155 in the state 157. For example, the operation 701 may be executed before transmission of the first signal 191. For example, the processor 120 may obtain the second signal 193 within the second time resources in a slot before the first time resources in the slot transmitting the first signal 191. However, the disclosure is not limited thereto. For example, the processor 120 may obtain the second signal 193 in another slot before the slot transmitting the first signal 191.

In operation 702, the processor 120 may identify whether the second signal 193 is within the second reference state, based at least partially on obtaining the second signal 193. For example, the processor 120 may execute operation 703 in response to the second signal 193 in the second reference state and execute operation 705 in response to the second signal 193 in the state different from the second reference state.

In operation 703, the processor 120 may obtain the coupling signal 192 of the first signal 191 by transmitting the first signal 191, in response to the second signal 193 in the second reference state. For example, the processor 120 may transmit the first signal 191, based on changing the state of the first switch 150 from the state 152 to the state 151 and changing the state of the second switch 155 from the state 157 to the state 156, in response to the second signal 193 in the second reference state. The processor 120 may obtain the coupling signal 192 of the first signal 191, based on the transmission of the first signal 191. The processor 120 may identify whether the coupling signal 192 of the first signal 191 is within the first reference state.

In operation 705, the processor 120 may cease transmitting the first signal 191, in response to the second signal 193 in the state different from the second reference state. For example, the processor 120 may bypass, defer, or refrain from transmitting the first signal 191, in response to the second signal 193 in the state different from the second reference state. For example, the processor 120 may reset at least a portion of the RFIC 130 used to obtain the second signal 193, or either suspend or defer using of the at least a portion of the RFIC 130 for a preset time, based on the second signal 193 in the state different from the second reference state. For example, the processor 120 may cease transmitting the first signal 191, in response to the second signal 193 in the state different from the second reference state, and reset at least a portion of the RFIC 130 (e.g., Tx chain 135 and/or Rx chain 145) used to obtain the second signal 193. For example, the processor 120 may cease transmitting the first signal 191, in response to the second signal 193 in the state different from the second reference state, and cease or defer using of the at least a portion of the RFIC 130 (e.g., Tx chain 135 and/or Rx chain 145) for a predetermined time. For example, the processor 120 may perform the transmission of the first signal 191 using other components (not shown in FIG. 1) in the electronic device 101. However, the disclosure is not limited thereto.

As described above, the electronic device 101 may identify whether to transmit the first signal 191 based on the second signal 193, after obtaining the second signal 193, thereby enabling to reduce damage to the at least a portion of the RFIC 130 related to the transmission of the first signal 191 or damage to the at least a portion of the RFFE 160 due to the malfunction of the at least a portion of the RFIC 130.

Referring back again to FIG. 1, in an embodiment, the processor 120 may obtain the second signal 193, based on electrically connecting the Tx chain 135 and the Rx chain 145 through the first switch 150 and the second switch 155 in response to obtaining the coupling signal 192 of the first signal 191. For example, the processor 120 may obtain the second signal 193 immediately after obtaining the coupling signal 192 of the first signal 191, independently from whether the coupling signal 192 of the first signal 191 is in the first reference state. For example, the obtaining the second signal 193 may be performed based on a preset period. For example, the obtaining the second signal 193 may be initiated and periodically executed, in response to allocation or scheduling of the transmission through the Tx chain 135, the PA 161, and the antenna 190. However, the disclosure is not limited thereto.

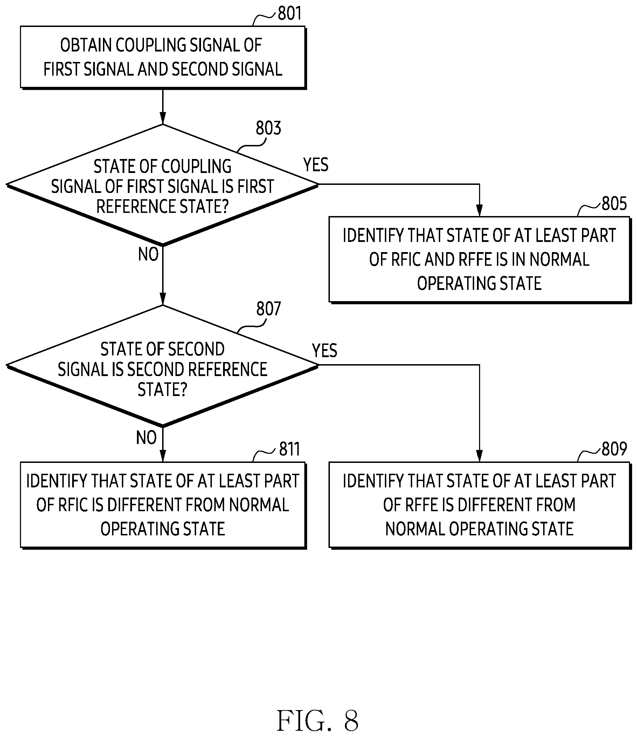

In an embodiment, the processor 120 may identify any component of the electronic device 101 in malfunction of at least a portion of the RFIC 130 and at least a portion of the RFFE 160 related to the transmission of the first signal 191, based on the coupling signal 192 of the first signal 191 and the second signal 193. The above identification will be described with reference to FIG. 8.

FIG. 8 is a flowchart illustrating an exemplary method of identifying a state of an RFIC and an RFFE, based on obtaining a coupling signal of a first signal and a second signal.

Referring to FIG. 8, in operation 801, the processor 120 may obtain the coupling signal 192 of the first signal 191 and the second signal 193. For example, the processor 120 may transmit the first signal 191 and obtain the coupling signal 192 of the first signal 191, based on setting the state of the first switch 150 to the state 151 and setting the state of the second switch 155 to the state 156. For example, the processor 120 may obtain the second signal 193, based on setting the state of the first switch 150 to the state 152 and setting the state of the second switch 155 to the state 157.

In operation 803, the processor 120 may identify whether the state of the coupling signal 192 of the first signal 191 is in the first reference state. For example, the processor 120 may execute operation 805 based on the coupling signal 192 of the first signal 191 in the first reference state and operation 807 based on the coupling signal 192 of the first signal 191 in the state different from the first reference state.

In operation 805, the processor 120 may identify that a state of at least a portion of the RFIC 130 and the RFFE 160 related to the transmission of the first signal 191 is in the normal operating state, based on identifying that the state of the coupling signal 192 of the first signal 191 is in the first reference state. For example, the state of the coupling signal 192 of the first signal 191 being in the first reference state indicates that a transmission path of the electronic device 101 for transmission of the first signal 191 is in a normal operating state, and thus, the processor 120 may identify that the states of the Tx chain 135, the Rx chain 145 and the PA 161 are in the normal state, based on the coupling signal 192 of the first signal 191 in the first reference state.

In operation 807, the processor 120 may identify whether the state of the second signal 193 is in the second reference state, based on identifying that the state of the coupling signal 192 of the first signal 191 is different from the first reference state. For example, the processor 120 may execute operation 809 based on the second signal 193 in the second reference state and operation 811 based on the second signal 193 in the state different from the second reference state.

FIG. 8 illustrates an example in which the operation 807 is executed based on the operation 803, but it is only for convenience of description. For example, at least part of the operation 803 and at least part of the operation 807 of FIG. 8 may be executed in parallel, but the disclosure is not limited thereto.

In operation 809, the processor 120 may identify that a state of at least a portion of the RFFE 160 related to the transmission of the first signal 191 is different from the normal operating state, based on identifying that the state of the second signal 193 is in the second reference state. For example, the state of the second signal 193 being in the second reference state indicates that the state of at least portion of the RFIC 130 related to the transmission of the first signal 191 is in the normal operating state, so the processor 120 may identify that the state of the RFFE 160 related to the transmission of the first signal 191 is different from the normal operating state, based on identifying that the state of the second signal 193 is in the second reference state. For example, the processor 120 may identify that the state of the PA 161 is different from the normal operating state, based on the coupling signal 192 of the first signal 191 in the state different from the first reference state and the second signal 193 in the second reference state. For example, the processor 120 may reset at least a portion of the RFFE 160 related to the transmission of the first signal 191, based on the identification. For example, the processor 120 may reset the PA 161 based on the identification. However, the disclosure is not limited thereto.

In operation 811, the processor 120 may identify that the state of at least a portion of the RFIC 130 related to the transmission of the first signal 191 is different from the normal operating state, based on identifying that the state of the second signal 193 is different from the second reference state. For example, the state of the second signal 193 being different from the second reference state indicates that the state of the at least a portion of the RFIC 130 related to the transmission of the first signal 191 is different from the normal operating state and the state of the at least a portion of the RFEE 160 related to the transmission of the first signal 191 is different from the normal operating state, and therefore, the processor 120 may identify that the state of the at least a portion of the RFIC 130 is different from the normal operating state, before it identifies that the state of the at least a portion of the RFEE 160 is different from the normal operating state. For example, the processor 120 may reset the at least a portion of the RFIC 130 related to the transmission of the first signal 191, based on the coupling signal 192 of the first signal 191 in the state different from the first reference state and the second signal 193 in the state different from the second reference state. For example, the processor 120 may reset the Tx chain 135 based on the identification. However, the disclosure is not limited thereto.

Although not shown in FIG. 8, the processor 120 may, after resetting the at least a portion of the RFIC 130, transmit the signal subsequent to the first signal 191 through the first switch 150 in the state 151 and the second switch 155 in the state 156, and obtain the coupling signal of the signal. In response to obtaining the coupling signal of the signal, the processor 120 may identify whether the state of the coupling signal of the signal is in the first reference state. For example, the processor 120 may reset the at least a portion of the RFFE 160, based on the coupling signal of the signal in the state different from the first reference state. However, the disclosure is not limited thereto.

As described above, the electronic device 101 can identify any component in malfunction amongst the components of the electronic device 101 used for transmission of the first signal 191, by obtaining the coupling signal 192 of the first signal 191 and obtaining the second signal 193. For example, the electronic device 101 can enhance the quality of communications through the electronic device 101 with such identification.

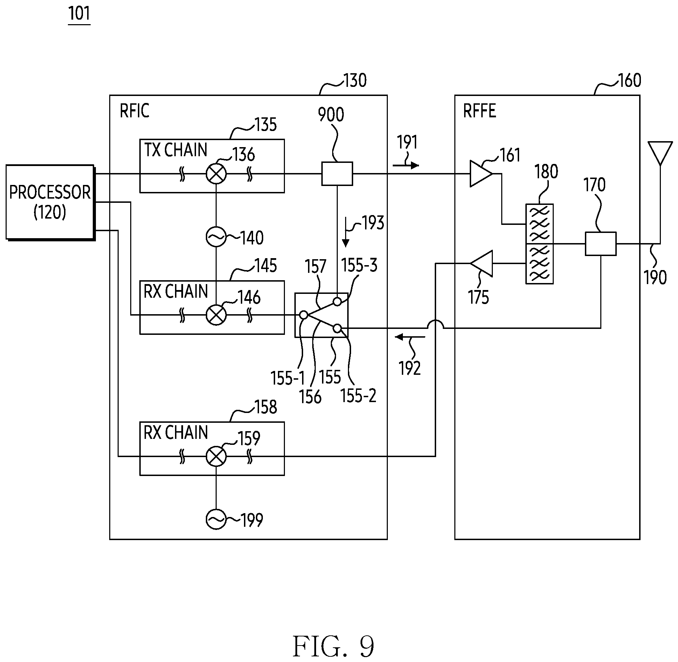

The above examples describe that the electronic device 101 includes the first switch 150 and the second switch 155 within the RFIC 130 to obtain the second signal 193, but it is only for convenience of explanation. For example, the first switch 150 and the second switch 155 may be located outside the RFIC 130. For example, the first switch 150 and the second switch 155 may be disposed in between the RFIC 130 and the RFFE 160. For example, the first switch 150 and/or the second switch 155 may be replaced with other components. For example, the electronic device 101 may include components for obtaining the second signal 193, with other design distinguished from the design illustrated with reference to FIG. 1. The other design will be described with reference to FIGS. 9 to 10.

FIGS. 9 to 10 are simplified block diagrams of an exemplary electronic device.

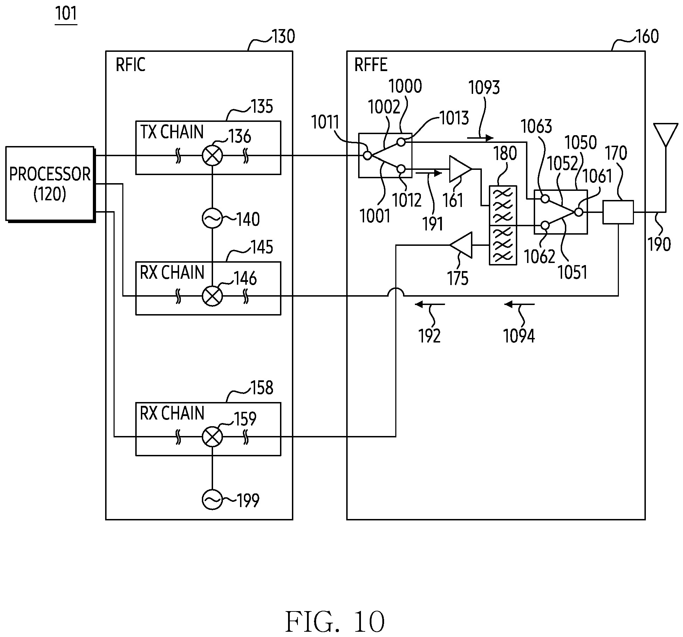

Referring to FIG. 9, the electronic device 101 may include a coupler 900 substituting for the first switch 150. For example, the coupler 900 may be disposed in between the Tx chain 135 and the PA 161. The additional examples and Figures as described above for the electronic device according to the FIG. 1 and the succeeding Figures 2 to 8 with descriptions thereto can be applied also the respective examples of Fig. 9 and 10 and repetitive descriptions are only avoided for the sake of conciseness.

In an embodiment, the processor 120 may perform transmitting the first signal 191 through the coupler 900 and the second switch 155, obtaining the coupling signal 192 of the first signal 191, and obtaining the second signal 193 which is a coupling signal of the first signal 191 obtained through the coupler 900.

For example, the processor 120 may, based on setting the state of the second switch 155 to the state 156, transmit the first signal 191 through the Tx chain 135, the PA 161, and the antenna 190 and obtain the coupling signal 192 of the first signal 191 through the Rx chain 145. For example, the processor 120 may perform the operations illustrated above, for the coupling signal 192 of the first signal 191.

For example, in response to setting the state of the second switch 155 to the state 157, the processor 120 may obtain the second signal 193, through the Rx chain 145, which is a coupling signal of the first signal 191 obtained through the coupler 900. For example, since the second signal 193 is a signal obtained through the coupler 900, it may indicate the state of the Tx chain 135, as opposed to the coupling signal 192 of the first signal 191. For example, the processor 120 may execute the operations illustrated above, for the second signal 193.

As described above, the electronic device 101 can obtain the second signal 193, by including the coupler 900 instead of the first switch 150.

Referring to FIG. 10, the electronic device 101 may include a first switch 1000 and a second switch 1050, substituting for the first switch 150 and the second switch 155. alternatively, for example, the first switch 1000 and the second switch 1050 may be included in the RFFE 160, unlike the first switch 150 and the second switch 155 as disclosed with respect to FIG. 1. For example, the first switch 1000 may be arranged either within RFIC 130 or out of the RFIC 130 and the RFFE 160, according to embodiments.

For example, the first switch 1000 may include a first terminal 1011 connected to the Tx chain 135, a second terminal 1012 connected to the PA 161, and a third terminal 1013 connected to a third terminal 1063 of the second switch 1050. For example, the second switch 1050 may include a first terminal 1061 connected to the coupler 170, a second terminal 1602 connected to the PA 161, and a third terminal 1603 connected to the third terminal 1013 of the first switch 1000.

For example, based on electrically connecting the Tx chain 135 to the PA 161 through the first switch 1000 and electrically connecting the PA 161 to the coupler 170 (or antenna 190) through the second switch 1050, the processor 120 may transmit the first signal 191 obtained through the Tx chain 135, via the antenna 190 with the power set using the PA 161, and obtain the coupling signal 192 of the first signal 191 through the Rx chain 145. For example, the electrical connection between the Tx chain 135 and the PA 161 through the first switch 1000 may be formed by electrically connecting the second terminal 1012 of the first switch 1000, amongst the second terminal 1012 of the first switch 1000 and the third terminal 1013 of the first switch 1000, to the first terminal 1011 of the first switch 1000. For example, the electrical connection between the Tx chain 135 and PA 161 may be provided through the first switch 1000 in a state 1001. For example, the electrical connection between the PA 161 and the coupler 170 through the second switch 1050 may be formed by electrically connecting the second terminal 1062 of the second switch 1050, amongst the second terminal 1062 of the second switch 1050 and the third terminal 1053 of the second switch 1050, to the first terminal 1062 of the second switch 1050. For example, the electrical connection between PA 161 and coupler 170 may be provided through the second switch 1050 in a state 1051.

For example, the processor 120 may transmit the second signal 1093 obtained through the Tx chain 135, via the antenna 190, and obtain the coupling signal 1094 of the second signal 1093 through the Rx chain 145, based on electrically connecting the Tx chain 135 electrically disconnected from the PA 161 and the coupler 170 electrically disconnected from the PA 161, through the first switch 1000 and the second switch 1050. For example, the electrical connection between the Tx chain 135 and the coupler 170 through the first switch 1000 and the second switch 1050 may be established by electrically connecting the third terminal 1013 of the first switch 1000, amongst the second terminal 1012 of the first switch 1000 and the third terminal 1013 of the first switch 1000, to the first terminal 1011 of the first switch 1000, and electrically connecting the third terminal 1063 of the second switch 1050, amongst the second terminal 1062 of the second switch 1050 and the third terminal 1063 of the second switch 1050, to the first terminal 1061 of the second switch 1050. For example, the electrical connection between the Tx chain 135 and the coupler 170 may be provided through the first switch 1000 in a state 1002 and the second switch 1050 in a state 1052.

For example, the processor 120 may identify the state of the RFFE 160 and the state of the RFIC 130, based on the coupling signal 192 of the first signal 191 and the coupling signal 1094 of the second signal 1093.

For example, since the coupling signal 192 is part of the first signal 191 transmitted through the Tx chain 135 and PA 161, the coupling signal 192 may indicate a state of the transmission path of the first signal 191 and the reception path of the coupling signal 192. For example, the coupling signal 192 may indicate the state of the Tx chain 135 and the state of the PA 161. For example, the coupling signal 192 may indicate the state of the Rx chain 145.

For example, since the coupling signal 1094 is generated through the Tx chain 135 and obtained through the Rx chain 145, the coupling signal 1094 may indicate the state of the RFIC 130 amongst the RFIC 130 and the RFFE 160. For example, since the coupling signal 1094 does not pass through the PA 161, the coupling signal 1094 may indicate the state of the Tx chain 135 amongst the state of the Tx chain 135 and the states of the PA 161. For example, since the coupling signal 1094 does not pass through the PA 161, the coupling signal 1094 may indicate the state of the Rx chain 145. For example, since the coupling signal 192 indicates both the state of the Tx chain 135 and the state of the PA 161 and the coupling signal 1094 indicates only the state of the Tx chain 135 amongst the Tx chain 135 and the PA 161, the processor 120 can identify the state of the RFFE 160 and the state of the RFIC 130, based on the coupling signal 192 and the coupling signal 1094. For example, the processor 120 may process the coupling signal 192 and the coupling signal 1094 through the operations illustrated in FIGS. 1 to 8. For example, the processor 120 may perform the operations to process the coupling signal 192 to identify the state of the RFIC 130 and/or RFFE 160 illustrated with reference to FIGS. 1 to 8, for the coupling signal 192, and may perform the operations to process the second signal 193 to identify the state of RFIC 130 and/or the RFFE 160 illustrated with reference to FIGS. 1 to 8, for the coupling signal 1094.

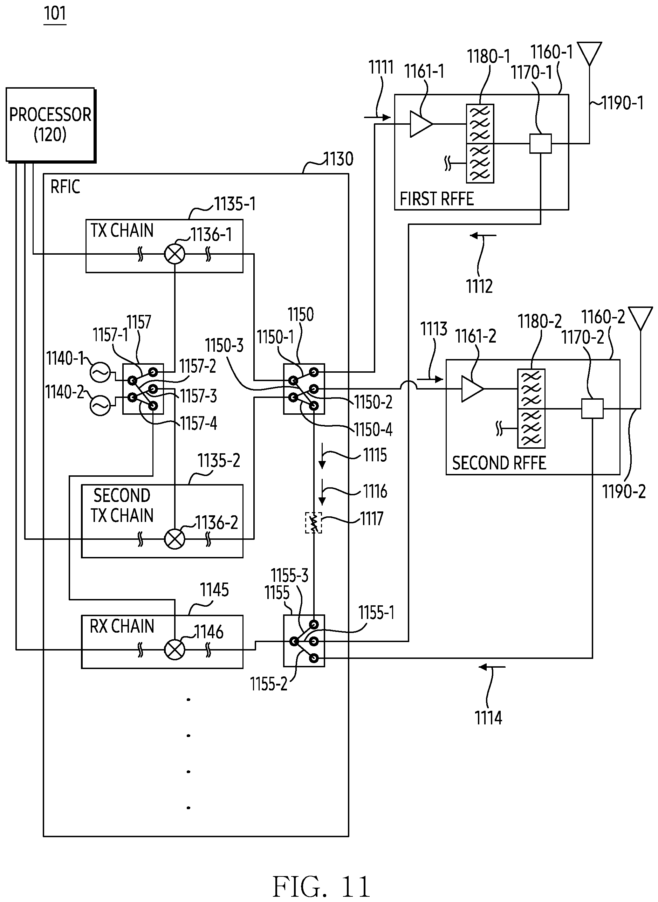

According to an embodiment, the electronic device 101 may include components for transmitting signals through two or more antennas. The electronic device 101 may include a component for simultaneously transmitting two or more signals. For example, the electronic device 101 may include two or more RFFEs to support carrier aggregation and/or dual connectivity. For example, the electronic device 101 including two or more RFFEs will be described with reference to FIG. 11.

FIG. 11 is a simplified block diagram of an exemplary electronic device including two or more RFFEs.

Referring to FIG. 11, the electronic device 101 may include a first antenna 1190-1.

The electronic device 101 may include a processor 120.

The electronic device 101 may include a first RFFE 1160-1 including a coupler 1170-1 connected to the first antenna 1190-1 and a power amplifier 1161-1 connected to the coupler 1170-1. The first RFFE 1160-1 may include a duplexer 1180-1 (or switch 300).

The electronic device 101 may include a second antenna 1190-2.

The electronic device 101 may include a second RFFE 1160-2 including a coupler 1170-2 connected to the second antenna 1190-2 and a PA 1161-2 connected to the coupler 1170-2 connected to the second antenna 1190-2. The second RFFE 1160-2 may include a duplexer 1180-2 (or switch 300).

The electronic device 101 may comprise a radio frequency integrated circuit (RFIC) 1130 including a first local oscillator (LO) 1140-1, a second LO 1140-2, a first Tx (transmit) chain 1135-1 including a mixer 1136-1 connectable to the first LO 1140-1 of the first LO 1140-1 and the second LO 1140-2, a second Tx chain 1135-2 including a mixer 1136-2 connectable to the second LO (1140-2) of the first LO 1140-1 and the second LO 1140-2, an Rx (receive) chain 1145 including a mixer 1146 connectable to the first LO 1140-1 or the second LO 1140-2, a first switch 1150 for connecting the PA 1161-1 or the Rx chain 1145 of the first RFFE 1160-1 to the first Tx chain 1135-1 or connecting the PA 1161-2 or the Rx chain 1145 of the second RFFE 1160-2 to the second Tx chain 1135-2, a second switch 1155 for connecting the coupler 1170-1 or the first Tx chain 1135-1 of the first RFFE 1160-1 to the Rx chain 1145 or connecting the coupler 1170-2 or the second Tx chain 1135-2 of the second RFFFE 1160-2 to the Rx chain 1145, and a third switch 1157 for connecting the first LO 1140-1 to the mixer 1136-1 of the first Tx chain 1135-1, connecting the second LO 1140-2 to the mixer 1136-2 of the second Tx chain 1135-2, or connecting the first LO 1140-1 or the second LO 1140-2 to the mixer 146 of the Rx chain 1145. In an embodiment, the RFIC 1130 may further include an attenuator 1117, such as the attenuator 400 of FIG. 4, between the first switch 1150 and the second switch 1155.

For example, while the first LO 1140-1 is electrically connected to the mixer 1136-1 of the first Tx chain 1157 through the third switch 1157, based on electrically connecting the PA 1161-1 of the first RFFE 1160-1 and the first Tx chain 1135-1 through the first switch 1150, the processor 120 may transmit the first signal 1111 obtained through the first Tx chain 1135-1, via the first antenna 1190-1, with the power set using the PA 1161-1 of the first RFFE 1160-1. For example, the processor 120 may transmit the first signal 1111 through the first antenna 1190-1, via the third switch 1157 in a state 1157-1 and the first switch 1150 in a state 1150-1.

For example, while the first LO 1140-1 is connected to the mixer 1146 of the Rx chain 1145 through the third switch 1157, based on electrically connecting the coupler 1170-1 of the first RFFE 1160-1 and the Rx chain 1145 through the second switch 1155, the processor 120 may obtain the coupling signal 1112 of the first signal 1111 through the Rx chain 1145. For example, the processor 120 may obtain the coupling signal 1112 of the first signal 1111 through the third switch 1157 in a state 1157-2 and the second switch 1155 in a state 1155-1.

For example, based on electrically connecting the PA 1161-2 of the second RFFE 1160-2 and the second Tx chain 1135-2 through the first switch 1150, while the second LO 1140-2 is electrically connected to the mixer 1136-2 of the second Tx chain 1157 through the third switch 1157, the processor 120 may transmit the second signal 1113 obtained through the second Tx chain 1135-2, via the second antenna 1190-2, with the power set using the PA 1161-2 of the second RFFE 1160-1. For example, the second signal 1113 may be transmitted through the second antenna 1190-2, while the first signal 1111 is transmitted through the first antenna 1190-1. For example, the processor 120 may transmit the second signal 1113 through the antenna 1190-2, via the third switch 1157 in a state 1157-3 and the first switch 1150 in a state 1155-2.

For example, based on electrically connecting the coupler 1170-2 of the second RFFE 1160-2 and the Rx chain 1145 through the second switch 1155, while the second LO 1140-2 is electrically connected to the mixer 1146 of the Rx chain 1145 through the third switch 1157, the processor 120 may obtain the coupling signal 1114 of the second signal 1113 through the Rx chain 1145. For example, the processor 120 may obtain the coupling signal 1114 of the second signal 1113, through the third switch 1157 in a state 1157-4 and the second switch 1155 in a state 1155-2.

For example, based on connecting the first Tx chain 1135-1 electrically disconnected from the PA 1161-1 of the first RFFE 1160-1 and the Rx chain 1145 electrically disconnected from the coupler 1170-1 of the first RFFE 1160-1, through the first switch 1155 and the second switch 1155, the processor 120 may obtain the third signal 1115, being obtained through the first Tx chain 1135-1 while the first LO 1140-1 is electrically connected with the mixer 1136-1 of the first Tx chain 1135-1 through the third switch 1157, through the Rx chain 1145 while the first LO 1140-1 is electrically connected to the mixer 1146 of the Rx chain 1145 through the third switch 1157. For example, the processor 120 may generate the third signal 1115 through the first switch 1150 in a state 1150-3, the second switch 1155 in a state 1155-3, and the third switch 1157 in a state 1157-1. For example, the processor 120 may obtain the third signal 1115 through the Rx chain 1145, via the first switch 1150 in the state 1150-3, the second switch 1155 in the state 1155-3, and the third switch 1157 in the state 1157-2.

For example, based on connecting the second Tx chain 1135-2 electrically disconnected from the PA 1161-2 of the second RFFE 1160-2 and the Rx chain 1145 electrically disconnected from the coupler 1170-2 of the second RFFE 1160-2, the processor 120 may generate a fourth signal 1116, being obtained through the second Tx chain 1135-2 while the second LO 1140-2 is electrically connected to the mixer 1136-2 of the second Tx chain 1135-2 through the third switch 1157, via the Rx chain 1145 while the second LO 1140-2 is electrically connected to the mixer 1146 of the Rx chain 1145 through the third switch 1157. For example, the processor 120 may generate the fourth signal 1116 through the first switch 1150 in a state 1150-4, the second switch 1155 in s state 1155-3, and the third switch 1157 in a state 1157-3. For example, the processor 120 may obtain the fourth signal 1116 through the Rx chain 1145, via the first switch 1150 in the state 1155-4, the second switch 1155 in the state 1155-3, and the third switch 1157 in the state 1157-4.

For example, the processor 120 may identify the state of the first RFFE 1160-1, the state of the second RFFE 1160-2, and the state of the RFIC 1130, based at least partially on the coupling signal 1112 of the first signal 1111, the coupling signal 1114 of the second signal 1113, the third signal 1115, and the fourth signal 1116.

For example, the processor 120 may identify the state of the first RFFE 1160-1 and the state of the RFIC 1130, based on the coupling signal 1112 of the first signal 1111 and the third signal 1115. For example, the processor 120 may identify the state of the first RFFE 1160-1 and the state of the RFIC 1130, by executing the identification based on the coupling signal 1112 of the first signal 1111 and the third signal 1115, as in the identification executed based on the coupling signal 192 of the first signal 191 and the second signal 193, as described above.

For example, the processor 120 may identify the state of the second RFFE 1160-2 and the state of the RFIC 1130, based on the coupling signal 1114 of the second signal 1113 and the fourth signal 1116. For example, the processor 120 may identify the state of the second RFFE 1160-2 and the state of the RFIC 1130, by executing the identification based on the coupling signal 1114 of the second signal 1113 and the fourth signal 1116, as in the above-described identification executed based on the coupling signal 192 of the first signal 191 and the second signal 193.

As described above, while transmitting two or more signals, the electronic device 101 can identify the state of the first RFFE 1160-1, the state of the second RFFE 1160-2, and the state of the RFIC 1130, based at least partially on the coupling signal 1112 of the first signal 1111, the coupling signal 1114 of the second signal 1113, the third signal 1115, and the fourth signal 1116.

FIG. 12 is a block diagram of an electronic device in a network environment according to various embodiments.

FIG. 12 is a block diagram of an electronic device 1201 in a network environment 1200 according to various embodiments. Referring to FIG. 12, an electronic device 1201 in a network environment 1200 may communicate with an electronic device 1202 via a first network 1298 (e.g., a short-range wireless communication network), or at least one of an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, a memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module (SIM) 1296, or an antenna module 1297. In some embodiments of the disclosure, at least one of the components (e.g., the connecting terminal 1278) may be omitted from the electronic device 1201, or one or more other components may be added in the electronic device 1201. In some embodiments of the disclosure, some of the components (e.g., the sensor module 1276, the camera module 1280, or the antenna module 1297) may be implemented as a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to an embodiment, as at least part of the data processing or computation, the processor 1220 may store a command or data received from another component (e.g., the sensor module 1276 or the communication module 1290) in a volatile memory 1232, process the command or the data stored in the volatile memory 1232, and store resulting data in a non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be adapted to consume less power than the main processor 1221, or to be specific to a specified function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 1223. According to an embodiment, the auxiliary processor 1223 (e.g., the neural processing unit) may include a hardware structure specified for artificial intelligence model processing. An artificial intelligence model may be generated by machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuitry to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an embodiment, the audio module 1270 may obtain the sound via the input module 1250, or output the sound via the sound output module 1255 or a speaker or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high-definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, a HDMI connector, a USB connector, a SD card connector, or an audio connector (e.g., a headphone connector).

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to an embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as Bluetooth^{™}, wireless-fidelity (Wi-Fi) direct, or infrared data association (IrDA)) or the second network 1299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mm Wave band) to address, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element including a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in the communication network, such as the first network 1298 or the second network 1299, may be selected, for example, by the communication module 1290 (e.g., the wireless communication module 1292) from the plurality of antennas. The signal or the power may then be transmitted or received between the communication module 1290 and the external electronic device via the selected at least one antenna. According to an embodiment, another component (e.g., a radio frequency integrated circuit (RFIC)) other than the radiating element may be additionally formed as part of the antenna module 1297.

According to various embodiments, the antenna module 1297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. Each of the electronic devices 1202 or 1204 may be a device of a same type as, or a different type, from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In another embodiment of the disclosure, the external electronic device 1204 may include an internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

As described above, the electronic device 101 may include an antenna 190. According to an embodiment, the electronic device 101 may include a radio frequency front end (RFFE) 160 including a coupler 170 connected to the antenna 190 and a power amplifier (PA) 161 connected to the coupler 170. According to an embodiment, the electronic device 101 may include an radio frequency integrated circuit (RFIC) 130 including a local oscillator (LO) 140, a Tx (transmit) chain 135 including a mixer 136 connected to the LO 140, a Rx (receive) chain 145 including a mixer 146 connected to the LO 140, a first switch 150 for connecting the PA 161 or the Rx chain 145 to the Tx chain 135, and a second switch 155 for connecting the coupler 170 or the Tx chain 135 to the Rx chain 145. According to an embodiment, the electronic device 101 may include a processor 120. According to an embodiment, based on connecting the PA 161 and the Tx chain 135 through the first switch 150 and connecting the coupler 170 and the Rx chain 145 through the second switch 155, the processor 120 may be configured to transmit a first signal 191 obtained through the Tx chain 135, via the antenna 190 with the power set using the PA 161, and obtain a coupling signal 192 of the first signal 191 through the Rx chain 145. According to an embodiment, based on connecting the Tx chain 135 disconnected from the PA 161 and the Rx chain 145 disconnected from the coupler 170 through the first switch 150 and the second switch 155, the processor 120 may be configured to obtain a second signal 193 obtained through the Tx chain 135, via the Rx chain 145. According to an embodiment, the processor 120 may be configured to identify a state of the RFFE 160 and a state of the RFIC 130, based at least partially on the coupling signal 192 of the first signal 191 and the second signal 193. Controlling the first switch 150 and/or the second switch 155 allows the electronic device to receive the second signal 193 and the coupling signal 192 which are indicative of the integrity of different corresponding transmission paths or signal paths and components on the respective signal paths which thus allow to identify and/or locate states, for example malfunction or normal operation states, of at least a portion of the RFIC 130 and at least a portion of the RFFE 160. The electronic device 101 thus can enhance the quality of communications through the electronic device.

According to an embodiment, the processor 120 may be configured to identify whether the state of the coupling signal 192 of the first signal 191 is in a reference state, in response to obtaining the coupling signal 192 of the first signal 191. According to an embodiment, the processor 120 may be configured to maintain a connection between the PA 161 and the Tx chain 135 through the first switch 150 and a connection between the coupler 170 and the Rx chain 145 through the second switch 155, in response to the state being in the reference state. Thus, in this case, the electronical device may safely transmit the first signal 191 since the transmission path is in normal state. According to an embodiment, in response to the state different from the reference state, the processor 120 may be configured to disconnect the Tx chain 135 from the PA 161 through the first switch 150, disconnect the Rx chain 145 from the coupler 170 through the second switch 155, and connect the Tx chain 135 and Rx chain 145 through the first switch 150 and the second switch 155. Thus, the electronic device may be enabled to further explore the cause and/or location of malfunction in the electronic device.

According to an embodiment, in response to the state being in the reference state, the processor 120 may be configured to refrain from disconnecting the Tx chain 135 from the PA 161 through the first switch 150, disconnecting the Rx chain 145 from the coupler 170 through the second switch 155, and connecting the Tx chain 135 and the Rx chain 145 through the first switch 150 and the second switch 155. Thus, the electronical device may transmit the first signal 191 as safe transmission operation since the transmission path is checked to be in normal state.

According to an embodiment, the processor 120 may be configured to identify whether the state is in the reference state, based on comparing reference information with information indicating quality of the coupling signal 192 of the first signal 191. Thus, an objective comparison reference is provided to identify normal state or malfunction. Similar testing can be performed for the second signal 193.

According to an embodiment, the information may be obtained based on identifying an adj acent channel power ratio (ACPR), an adj acent channel leakage ratio (ACLR), or an error vector magnitude (EVM) of the coupling signal 192 of the first signal 191. Similar testing can be performed also for the second signal 193.

According to an embodiment, the first switch 150 may include a first terminal 150-1 connected to the Tx chain 135, a second terminal 150-2 connected to the PA 161, and a third terminal 150-3 connected to the second switch 155. According to an embodiment, the second switch 155 may include a first terminal 155-1 connected to the Rx chain 144, a second terminal 155-2 connected to the coupler 170, and a third terminal 155-3 connected to the third terminal 150-3 of the first switch 150. According to an embodiment, the connection between the PA 161 and the Tx chain 135 may be established by connecting the second terminal 150-2 of the first switch 150, amongst the second terminal 150-2 of the first switch 150 and the third terminal 150-3 of the first switch 150, with the first terminal 150-1 of the first switch 150. According to an embodiment, the connection between the coupler 170 and the Rx chain 145 may be formed by connecting the second terminal 155-2 of the second switch 155, amongst the second terminal 155-2 of the second switch 155 and the third terminal 155-3 of the second switch 155, with the first terminal 155-1 of the second switch 155. According to one embodiment, the connection between the Tx chain 135 and the Rx chain 145 may be established by connecting the third terminal 150-3 of the first switch 150, amongst the second terminal 150-2 of the first switch 150 and the third terminal 150-3, with the first terminal 150-1 of the first switch 150, and connecting the third terminal 155-3 of the second switch 155, amongst the second terminal 155-2 of the second switch 155 and the third terminal 155-3 of the second switch 155, with the first terminal 155-1 of the second switch 155.

According to an embodiment, a connection path between the third terminal 150-3 of the first switch 150 and the third terminal 155-3 of the second switch 155 may include an attenuator 400. According to an embodiment, the processor 120 may be configured to obtain the second signal 193 having the power reduced through the attenuator 400, via the Rx chain 145, based on connecting the Tx chain 135 and the Rx chain 145 through the first switch 150 and the second switch 155. The attenuator 400 may reduce damage to at least a part of the RX chain 145 due to reducing the strength or electrical power of the second signal 193.

According to an embodiment, the processor 120 may be configured to obtain the second signal 193, based on connecting the Tx chain 135 and the Rx chain 145 through the first switch 150 and the second switch 155, in response to obtaining the coupling signal 192 of the first signal 191.

According to an embodiment, the obtaining the second signal 193 may be performed based on a predetermined period. Thus, the operation states may be automatically supervised as a supervision routine to ensure safe transmission operations of the electronic device.

According to an embodiment, the processor 120 may be configured to obtain the coupling signal 192 of the first signal 191, in response to obtaining the second signal 193, based on disconnecting the Rx chain 145 from the Tx chain 135 through the first switch 150 and the second switch 155, connecting the PA 161 and the Tx chain 135 through the first switch 150, and connecting the coupler 170 and the Rx chain 145 through the second switch 155.

According to an embodiment, the processor 120 may be configured to identify the state of the RFFE 160 and the state of the RFIC 130, by identifying that the states of the Tx chain 135, the Rx chain 145, and the PA 161 are in a normal operating state, based on the state of the coupling signal 192 of the first signal 191 in the first reference state; identifying that the states of the Tx chain 135 and the Rx chain 145 are in the normal operating state and the state of the PA 161 is different from the normal operating state, based on the state of the coupling signal 192 of the first signal 191 different from the first reference state and the state of the second signal 193 being in the second reference state; and identifying that the states of the Tx chain 135 and the Rx chain 145 are different from the normal operating state, based on the state of the coupling signal 192 of the first signal 191 different from the first reference state and the state of the second signal 193 different from the second reference state.

According to an embodiment, the RFFE 160 may include a low-noise amplifier (LNA) 175. According to an embodiment, the RFIC 130 may include another LO 199, and another Rx chain 158 including a mixer 159 connected to the other LO 199, the Rx chain 158 being connected to the LNA 175. The LNA may amplify power of the signal received through the antenna 190. According to an embodiment, the Rx chain 145 may be used to obtain the coupling signal 192 of the first signal 191. According to an embodiment, the other Rx chain 158 may be used to obtain a signal received through the antenna 190. Thus, availability of the electronic device is enhanced due to the additional independent receiving path since the device can receive both coupling signal 192 and signal from antenna 190 at a time.

According to an embodiment, the processor 120 may be configured to reset at least a portion of the RFFE 160, in response to identifying that the state of the RFFE 160 is different from the normal operating state, based at least partially on the coupling signal 192 of the first signal 191 and the second signal 193. According to an embodiment, the processor 120 may be configured to reset at least a portion of the RFIC 130, in response to identifying that the state of the RFIC 130 is different from the normal operating state, based at least partially on the coupling signal 192 of the first signal 191 and the second signal 193. Thus, an automatic reaction is implemented which may rapidly resolve an identified malfunction.

According to an embodiment the processor may be configured to identify whether a state of the second signal is in a second reference state, in response to obtaining the second signal. In response to the state being in the second reference state, the processor may be configured to obtain the coupling signal of the first signal by transmitting the first signal and the processor may be configured to, in response to the state being different from the second reference state, cease, e.g., for a certain time, transmitting the first signal. This may reduce damage to the at least a portion of the RFIC 130 related to the transmission of the first signal 191 or damage to the at least a portion of the RFFE 160 due to the identified malfunction of the at least a portion of the RFIC 130.

As described above, the electronic device 101 may include an antenna 190. According to an embodiment, the electronic device 101 may include a radio frequency integrated circuit (RFIC) 130 including a local oscillator (LO) 140, a TX (transmit) chain 135 including a mixer 136 connected to the LO 140, and an Rx (receive) chain 145 including a mixer 146 connected to the LO 140. According to an embodiment, the electronic device 101 may include a radio frequency front end (RFFE) 160 including a coupler 170 connected to the antenna 190 and connected to the Rx chain 145, a power amplifier PA 161, a first switch 1000 for connecting the PA 161 or the coupler 170 to the Tx chain 135, and a second switch 1050 for connecting the Tx chain 135 or the PA 161 to the coupler 170. According to an embodiment, the electronic device 101 may include a processor 120. According to an embodiment, the processor 120 may be configured to transmit the first signal 191 obtained through the Tx chain 135, via the antenna 190 with the power set using the PA 161 and obtain the coupling signal 192 of the first signal 191 through the Rx chain 145, based on connecting the Tx chain 135 to the PA 161 through the first switch 1000 and connecting the PA 161 and the coupler 170 through the second switch 1050. According to an embodiment, the processor 120 may be configured to transmit the second signal 1093 obtained through the Tx chain 135 and obtain the coupling signal of the second signal 1093 through the Rx chain 145, based on connecting the Tx chain 135 disconnected from the PA 161 and the coupler 170 disconnected from the PA 161, through the first switch 150 and the second switch 155. According to an embodiment, the processor 120 may be configured to identify the state of the RFFE 160 and the state of the RFIC 130, based at least partially on the coupling signal 192 of the first signal 191 and the coupling signal 1094 of the second signal 1093. Controlling the first switch 1000 and/or the second switch 1050 allows the electronic device to receive coupling signals 192, 194 which are indicative of the integrity of different corresponding transmission paths or signal paths and components on the respective signal paths which thus allow to identify and/or locate states, for example malfunction or normal operation states, of at least a portion of the RFIC 130 and at least a portion of the RFFE 160. The electronic device 101 thus can enhance the quality of communications through the electronic device.

According to an embodiment, the processor 120 may be configured to identify whether the state of the coupling signal 192 of the first signal 191 is in a reference state, in response to obtaining the coupling signal 192 of the first signal 191. According to an embodiment, the processor 120 may be configured to maintain connecting the Tx chain 135 to the PA 161 through the first switch 1000 and connecting the PA 161 and the coupler 170 through the second switch 1050, in response to the state being in the reference state. According to an embodiment, in response to the state being different from the reference state, the processor 120 may be configured to disconnect the Tx chain 135 from the PA 161 through the first switch 1000, disconnect the coupler 170 from the PA 161 through the second switch 1050, and connect the Tx chain 135 and the coupler 170.

According to an embodiment, the first switch 1000 may include a first terminal 1011 connected to the Tx chain 135, a second terminal 1012 connected to the PA 161, and a third terminal 1013 connected to the second switch 1050. According to an embodiment, the second switch 1050 may include a first terminal 1061 connected to the coupler 170, a second terminal 1062 connected to the PA 161, and a third terminal 1063 connected to the third terminal 1013 of the first switch 1000. According to an embodiment, the connection between the Tx chain 135 and the PA 161 may be formed by connecting the second terminal 1012 of the first switch 1000, among the second terminal 1012 of the first switch 1000 and the third terminal 1013 of the first switch 1000, with the first terminal 1011 of the first switch 1000. According to an embodiment, the connection between the PA 161 and the coupler 170 may be formed by connecting the second terminal 1062 of the second switch 1050, amongst the second terminal 1062 of the second switch 1050 and the third terminal 1063 of the second switch 1050, with the first terminal 1061 of the second switch 1050. According to an embodiment, the connection between the Tx chain 135 and the coupler 170 may be established by connecting the third terminal 1013 of the first switch 1000, among the second terminal 1012 of the first switch 1000 and the third terminal 1013 of the first switch 1000, with the first terminal 1011 of the first switch 1000, and connecting the third terminal 1063 of the second switch 1050, amongst the second terminal 1062 of the second switch 1050 and the third terminal 1063 of the second switch 1050, with the first terminal 1061 of the second switch 1050.

According to an embodiment, in response to obtaining the coupling signal 192 of the first signal 191, the processor 120 may be configured to obtain the coupling signal 1094 of the second signal 1093, based on connecting the Tx chain 135 and the coupler 170 through the first switch 1000 and the second switch 1050.

According to an embodiment, in response to obtaining the coupling signal 1094 of the second signal 1093, the processor 120 may be configured to obtain the coupling signal 192 of the first signal 191, based on disconnecting the coupler 170 from the Tx chain 135 through the first switch 1000 and the second switch 1050, connecting the Rx chain 135 and the PA 161 through the first switch 1000, and connecting the coupler 170 and the PA 161 through the second switch 1050.

As described above, an electronic device may include a first antenna. The electronic device may include a second antenna. The electronic device may include a first radio frequency front end (RFFE) including a coupler connected to the first antenna and a power amplifier (PA) connected to the coupler. The electronic device may include a second RFFE including a coupler connected to the second antenna and a PA connected to the coupler connected to the second antenna. The electronic device may comprise a radio frequency integrated circuit (RFIC) including a first local oscillator (LO), a second LO, a first Tx (transmit) chain including a mixer connectable to the first LO amongst the first LO and the second LO, a second Tx chain including a mixer connectable to the second LO amongst the first LO and the second LO, an Rx (receive) chain including a mixer connectable to the first LO or the second LO, a first switch for connecting the PA of the first RFFE or the Rx chain with the first Tx chain, or connecting the PA of the second RFFE or the Rx chain with the second Tx chain, a second switch for connecting the coupler of the first RFFE or the first Tx chain with the Rx chain, or connecting the coupler of the second RFFE or the second Tx chain with the Rx chain, and a third switch for connecting the first LO with the mixer of the first Tx chain, connecting the second LO with the mixer of the second Tx chain, or connecting the first LO or the second LO with the mixer of the Rx chain. The electronic device may include a processor. According to an embodiment, the processor may be configured to, based on connecting the PA of the first RFEE and the first Tx chain through the first switch, while the first LO is connected to the mixer of the first Tx chain through the third switch, transmit a first signal obtained through the first Tx chain, via the first antenna with the power set using the PA of the first RFFE. According to an embodiment, the processor may be configured to, based on connecting the coupler of the first RFFE and the Rx chain through the second switch, while the first LO is connected to the mixer of the Rx chain through the third switch, obtain a coupling signal of the first signal through the Rx chain. According to an embodiment, the processor may be configured to, based on connecting the PA of the second RFFE and the second Tx chain through the first switch, while the second LO is connected to the mixer of the second Tx chain through the third switch, transmit a second signal obtained through the second Tx chain, via the second antenna with the power set using the PA of the second RFFE. According to an embodiment, the processor may be configured to obtain a coupling signal of the second signal through the Rx chain, based on connecting the coupler of the second RFFE and the Rx chain through the second switch, while the second LO is connected to the mixer of the Rx chain through the third switch. According to an embodiment, the processor may be configured to, based on connecting the first Tx chain disconnected from the PA of the first RFFE and the Rx chain disconnected from the coupler of the first RFFE through the first switch and the second switch, obtain a third signal, the third signal being obtained through the first Tx chain while the first LO is connected to the mixer of the first Tx chain through the third switch, through the Rx chain while the first LO is connected to the mixer of the Rx chain through the third switch. According to an embodiment, the processor may be configured to, based on connecting the second Tx chain disconnected from the PA of the second RFFE and the Rx chain disconnected from the coupler of the second RFFE through the first switch and the second switch, obtain a fourth signal, the fourth signal being obtained through the second Tx chain while the second LO is connected to the mixer of the second Tx chain through the third switch, via the Rx chain while the second LO is connected to the mixer of the Rx chain through the third switch. According to an embodiment, the processor may be configured to identify a state of the first RFFE, a state of the second RFFE, and a state of the RFIC, based at least partially on the coupling signal of the first signal, the coupling signal of the second signal, the third signal, and the fourth signal. Thus, besides of that the electronic device includes two or more RFFEs, for example to support carrier aggregation and/or dual connectivity, an enhanced quality of communication through the electronic device is provided due to receiving signals through different transmission paths or signal paths and components on the respective signal paths to identify and/or locate states, for example malfunction or normal operation states, of at least a portion of the RFIC 130 and at least a portion of the RFFEs.

According to an embodiment, the second signal may be transmitted through the second antenna, while the first signal is transmitted through the first antenna.

The electronic device according to various embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., an internal memory 1236 or an external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
an antenna (190);
a radio frequency front end, RFFE, (160) including a coupler (170) connected to the antenna (190) and a power amplifier, PA, (161) connected to the coupler (170);
an radio frequency integrated circuit, RFIC, (130) including a local oscillator, LO, (140), a transmit, Tx, chain (135) including a mixer (136) connected to the LO (140), a receive, Rx, chain (145) including a mixer (146) connected to the LO (140), a first switch (150) for connecting the PA (161) or the Rx chain (145) to the Tx chain (135), and a second switch (155) for connecting the coupler (170) or the Tx chain (135) to the Rx chain (145); and
a processor (120),
wherein the processor (120) is configured to:
based on connecting the PA (161) and the Tx chain (135) through the first switch (150) and connecting the coupler (170) and the Rx chain (145) through the second switch (155), transmit a first signal (191) obtained through the Tx chain (135), via the antenna (190) with the power set using the PA (161), and obtain a coupling signal (192) of the first signal (191) through the Rx chain (145);
based on connecting the Tx chain (135) disconnected from the PA (161) and the Rx chain (145) disconnected from the coupler (170) through the first switch (150) and the second switch (155), obtain a second signal (193) obtained through the Tx chain (135), via the Rx chain (145); and
based at least partially on the coupling signal (192) of the first signal (191) and the second signal (193), identify a state of the RFFE (160) and a state of the RFIC (130).

2. The electronic device according to claim 1, wherein the processor (120) is configured to:
identify whether a state of the coupling signal (192) of the first signal (191) is in a first reference state, in response to obtaining the coupling signal (192) of the first signal (191);
in response to the state being in the first reference state, maintain a connection between the PA (161) and the Tx chain (135) through the first switch (150) and a connection between the coupler (170) and the Rx chain (145) through the second switch (155);
in response to the state being different from the first reference state, disconnect the Tx chain (135) from the PA (161) through the first switch (150), disconnect the Rx chain (145) from the coupler (170) through the second switch (155), and connect the Tx chain (135) and Rx chain (145) through the first switch (150) and the second switch (155).

3. The electronic device according to claim 2, wherein the processor (120) is configured to, in response to the state being in the first reference state, refrain from disconnecting the Tx chain (135) from the PA (161) through the first switch (150), disconnecting the Rx chain (145) from the coupler (170) through the second switch (155), and connecting the Tx chain (135) and the Rx chain (145) through the first switch (150) and the second switch (155).

4. The electronic device according to any one of the preceding claims 2 and 3, wherein the processor (120) is configured to, based on comparing reference information with information indicating quality of the coupling signal (192) of the first signal (191), identify whether the state is in the first reference state.

5. The electronic device according to claim 4, wherein the information is obtained based on identifying an adjacent channel power ratio, ACPR, an adjacent channel leakage ratio, ACLR, or an error vector magnitude, EVM, of the coupling signal (192) of the first signal (191).

6. The electronic device according to any one of the preceding claims,
wherein the first switch (150) includes a first terminal (150-1) connected to the Tx chain (135), a second terminal (150-2) connected to the PA (161), and a third terminal (150-3) connected to the second switch (155);
wherein the second switch (155) includes a first terminal (155-1) connected to the Rx chain (144), a second terminal (155-2) connected to the coupler (170), and a third terminal (155-3) connected to the third terminal (150-3) of the first switch (150);
wherein a connection between the PA (161) and the Tx chain (135) is formed by connecting the second terminal (150-2) of the first switch (150), amongst the second terminal (150-2) of the first switch (150) and the third terminal (150-3) of the first switch (150), with the first terminal (150-1) of the first switch (150);
wherein a connection between the coupler (170) and the Rx chain (145) is formed by connecting the second terminal (155-2) of the second switch (155), amongst the second terminal (155-2) of the second switch (155) and the third terminal (155-3) of the second switch (155), with the first terminal (155-1) of the second switch (155); and
wherein a connection between the Tx chain (135) and the Rx chain (145) is formed by connecting the third terminal (150-3) of the first switch (150), amongst the second terminal (150-2) of the first switch (150) and the third terminal (150-3), with the first terminal (150-1) of the first switch (150), and connecting the third terminal (155-3) of the second switch (155), amongst the second terminal (155-2) of the second switch (155) and the third terminal (155-3) of the second switch (155), with the first terminal (155-1) of the second switch (155).

7. The electronic device according to claim 6,
wherein a connection path between the third terminal (150-3) of the first switch (150) and the third terminal (155-3) of the second switch (155) include an attenuator (400); and
wherein the processor (120) is configured to obtain the second signal (193) having the power reduced through the attenuator (400), via the Rx chain (145), based on connecting the Tx chain (135) and the Rx chain (145) through the first switch (150) and the second switch (155).

8. The electronic device according to any one of the preceding claims, wherein the processor (120) is configured to obtain the second signal (193), based on connecting the Tx chain (135) and the Rx chain (145) through the first switch (150) and the second switch (155), in response to obtaining the coupling signal (192) of the first signal (191).

9. The electronic device according to any one of the preceding claims, wherein obtaining the second signal (193) is performed based on a predetermined period.

10. The electronic device according to any one of the preceding claims, wherein the processor (120) is configured to, in response to obtaining the second signal (193), obtain the coupling signal (192) of the first signal (191), based on disconnecting the Rx chain (145) from the Tx chain (135) through the first switch (150) and the second switch (155), connecting the PA (161) and the Tx chain (135) through the first switch (150), and connecting the coupler (170) and the Rx chain (145) through the second switch (155).

11. The electronic device according to any one of the preceding claims, wherein the processor (120) is configured to:
identify the state of the RFFE (160) and the state of the RFIC (130), by identifying that the states of the Tx chain (135), the Rx chain (145), and the PA (161) are in a normal operating state, based on the state of the coupling signal (192) of the first signal (191) being in the first reference state,
identify that the states of the Tx chain (135) and the Rx chain (145) are in the normal operating state and the state of the PA (161) is different from the normal operating state, based on the state of the coupling signal (192) of the first signal (191) being different from the first reference state and the state of the second signal (193) being in a second reference state, and
identify that the states of the Tx chain (135) and the Rx chain (145) are different from the normal operating state, based on the state of the coupling signal (192) of the first signal (191) being different from the first reference state and the state of the second signal (193) different from the second reference state.

12. The electronic device according to any one of the preceding claims, wherein the RFFE (160) further includes a low-noise amplifier, LNA, (175);
wherein the RFIC (130) further includes another LO (199), and another Rx chain (158) including a mixer (159) connected to the other LO (199), the other Rx chain (158) being connected to the LNA (175);
wherein the Rx chain (145) is used to obtain the coupling signal (192) of the first signal (191); and
wherein the other Rx chain (158) is used to obtain a signal received through the antenna (190).

13. The electronic device according to any one of the preceding claims, wherein the processor (120) is further configured to:
reset at least a portion of the RFFE (160), in response to identifying that the state of the RFFE (160) is different from the normal operating state, based at least partially on the coupling signal (192) of the first signal (191) and the second signal (193); and
reset at least a portion of the RFIC (130), in response to identifying that the state of the RFIC (130) is different from the normal operating state, based at least partially on the coupling signal (192) of the first signal (191) and the second signal (193).

14. The electronic device according to any one of the preceding claims, wherein the processor (120) is configured to:
identify whether a state of the second signal (193) is in a second reference state, in response to obtaining the second signal (193);
in response to the state being in the second reference state, obtain the coupling signal (192) of the first signal (191) by transmitting the first signal (191);
in response to the state being different from the second reference state, cease transmitting the first signal (191).

15. An electronic device (101), comprising:
an antenna (190);
a radio frequency integrated circuit, RFIC, (130) including a local oscillator, LO, (140), a transmit, Tx, chain (135) including a mixer (136) connected to the LO (140), and a receive, Rx, chain (145) including a mixer (146) connected to the LO (140);
a radio frequency front end, RFFE, (160) including a coupler (170) connected to the antenna (190) and connected to the Rx chain (145), a power amplifier, PA, (161), a first switch (1000) for connecting the PA (161) or the coupler (170) to the Tx chain (135), and a second switch (1050) for connecting the Tx chain (135) or the PA (161) to the coupler (170); and
a processor (120),
wherein the processor (120) is configured to:
transmit the first signal (191) obtained through the Tx chain (135), via the antenna (190) with the power set using the PA (161) and obtain the coupling signal (192) of the first signal (191) through the Rx chain (145), based on connecting the Tx chain (135) to the PA (161) through the first switch (1000) and connecting the PA (161) and the coupler (170) through the second switch (1050);
transmit the second signal (1093) obtained through the Tx chain (135) and obtain the coupling signal (1094) of the second signal (1093) through the Rx chain (145), based on connecting the Tx chain (135) disconnected from the PA (161) and the coupler (170) disconnected from the PA (161), through the first switch (1000) and the second switch (1050); and
identify the state of the RFFE (160) and the state of the RFIC (130), based at least partially on the coupling signal (192) of the first signal (191) and the coupling signal (1094) of the second signal (1093).
